# EUROPÄISCHE PATENTSCHRIFT

(11) **EP 3 423 743 B1**
(45) Veröffentlichungstag und Bekanntmachung des Hinweises auf die Patenterteilung: **07.04.2021**
(21) Anmeldenummer: 17705603.3
(22) Anmeldetag: 14.02.2017
(51) Int. Cl.: F16L 23/00, F16L 23/08, F16L 23/18, F16J 13/06

(54) **PROFILSCHELLE MIT DICHTELEMENT UND LEITUNGSVERBINDUNGSANORDNUNG MIT EINER DERARTIGEN PROFILSCHELLE**
PROFILE CLAMP COMPRISING A SEALING ELEMENT AND CONDUIT CONNECTION ASSEMBLY COMPRISING A PROFILE CLAMP OF THIS TYPE
COLLIER PROFILÉ COMPRENANT UN ÉLÉMENT D'ÉTANCHÉITÉ ET ENSEMBLE DE LIAISON DE CONDUITES COMPRENANT UN COLLIER PROFILÉ DE CE TYPE

(30) Priorität: 01.03.2016 DE 102016103687
(43) Veröffentlichungstag der Anmeldung: 09.01.2019
(73) Patentinhaber: NORMA Germany GmbH, 63477 Maintal (DE)
(72) Erfinder: KAYACIK, Erkan, 34841 Maltepe Istanbul (TR)
(74) Vertreter: Patentanwälte Olbricht Buchhold Keulertz
(86) Internationale Anmeldenummer: PCT/EP2017/053330
(87) Internationale Veröffentlichungsnummer: WO 2017/148700

(56) Entgegenhaltungen:
- EP-A1- 1 267 049
- DE-A1- 2 851 566
- DE-A1- 19 846 475
- GB-A- 1 214 847
- US-A1- 2013 207 389
- US-B1- 6 386 593

## Beschreibung

Die Erfindung betrifft eine Profilschelle mit einem Dichtelement gemäß dem Oberbegriff von Anspruch 1 sowie eine Leitungsverbindungsanordnung mit einer derartigen Profilschelle.

Derartige Profilschellen dienen beispielsweise zum fluiddichten Verbinden von zwei Rohrenden, die radial nach außen gerichtete Verbindungsflansche haben. Die Profilschelle wird dann auf diese Flansche aufgesetzt, wobei durch Spannen der Profilschelle axiale und radiale Haltekräfte eingebracht werden können. Ein Querschnitt des Profilbands ist dafür in der Regel V-förmig oder U-förmig ausgebildet.

Um eine fluiddichte Verbindung zu erreichen, wird häufig ein Dichtelement eingesetzt, das axial zwischen den Verbindungsflanschen der Rohrenden positioniert wird. Wenn das Dichtelement nicht an der Profilschelle befestigt ist, müssen mindestens zwei unabhängige Bauteile, nämlich die Profilschelle und das Dichtelement, gehandhabt werden mit der Folge, dass der Einbau der Profilschelle relativ kompliziert ist. Der Monteur muss dann sowohl das Dichtelement als auch die Profilschelle bezüglich der Rohre korrekt positionieren.

Es ist daher beispielsweise aus DE 602 10 142 T2 bekannt, das Dichtelement, das als ringförmige Scheibe ausgebildet ist, mit Hilfe von verformbaren Befestigungsklammern formschlüssig mit dem Profilband zu verbinden. Die Befestigungsklammern können dabei einstückig mit dem Dichtelement ausgebildet sein.

US 2013/207389 A1 lehrt ein Klemmsystem, bestehend aus Profilschelle und Dichtelement, zum Verbinden von zwei Rohren bzw. Rohrenden, wobei die einander gegenüberliegenden Enden der Rohre Auflageflächen aufweisen, die gegenüber den zylindrischen Außenflächen der Rohre vorstehen. Hierbei werden zur Befestigung des Dichtelements mehrere Haken beschrieben, die umfangsseitig angeordnet sind und lediglich an einem Profilband einer Profilschelle bzw. zwischen den Auflageflächen der Rohrenden angelegt und eingeklemmt werden können.

In DE 10 2011 116 768 A1 wird vorgeschlagen, das Dichtelement mit am Umfang verteilt angeordneten Abstandshaltern zu versehen, die elastisch verfombar sind und an einer radialen Innenseite des Profilbandes unter Vorspannung anliegen. Das Dichtelement wird so kraftschlüssig am Profilband gehalten, wobei das Dichtelement werkzeuglos eingebracht werden kann.

Diese Lösung verhindert jedoch kein Verdrehen zwischen Dichtelement und Profilband. Darüber hinaus besteht die Gefahr, dass sich das Dichtelement beim Aufweiten des Profilbandes löst.

Der Erfindung liegt daher die Aufgabe zu Grunde, eine Befestigung des Dichtelements in der Profilschelle zu verbessern.

Erfindungsgemäß wird diese Aufgabe durch eine Profilschelle und einem Dichtelement mit den Merkmalen des Anspruchs 1 sowie einer Leitungsverbindungsanordnung mit den Merkmalen des Anspruchs 12 gelöst. Vorteilhafte Ausgestaltungen finden sich in den Unteransprüchen.

Bei einer Profilschelle mit einem Profilband und einem ringförmigen Dichtelement, wobei das Profilband an seinen Enden zwei Spannköpfe aufweist, die über ein Spannelement in Form einer Spannschraube miteinander verbunden sind, wobei das Dichtelement eine radial nach außen abstehende Haltelasche aufweist, die am Spannelement gehalten ist, ist erfindungsgemäß vorgesehen, dass sich die Haltelasche in einen Bereich zwischen den Spannköpfen erstreckt und von außen gut sichtbar ist, wobei die Haltelasche ein umgebogenes Ende aufweist, das das Spannelement zumindest teilweise umgreift.

Erfindungsgemäß stützt sich das Dichtelement also nicht nur am Profilband ab, sondern geht eine zusätzliche Verbindung mit dem Spannelement ein. Diese Verbindung dient dabei als Rotationssicherung, kann aber auch ein Lösen des Dichtelements verhindern, wenn die Profilschelle weit aufgebogen wird. Dabei erstreckt sich die Haltelasche in einen Bereich zwischen den Spannköpfen und ist von außen gut sichtbar. Die ordnungsgemäße Lagesicherung des Dichtelements innerhalb des Profilbands ist damit leicht feststellbar.

Erfindungsgemäß ist auch vorgesehen, dass die Haltelasche ein umgebogenes Ende aufweist, das das Spannelement zumindest teilweise umgreift. Die Haltelasche, die insbesondere einstückig mit dem Dichtelement ausgebildet ist, erhält also durch einfaches Umformen ihres Endes eine Geometrie, mit der sie am Spannelement gehalten werden kann. Die Herstellung ist damit sehr einfach. Ferner lässt sich ein umgebogenes Ende sehr einfach um das Spannelement herumführen, sodass auch die Sicherung des Dichtelements in der Profilschelle mit geringem Aufwand erfolgen kann. Gleichzeitig kann für die für das Spannelement ausreichend Bewegungsspielraum erhalten bleiben, so dass ein Spannen der Profilschelle nicht beeinträchtigt wird.

In einer bevorzugten Weiterbildung weist das Dichtelement zumindest einen radial nach außen ragenden Vorsprung auf, der im Bereich einer Ausnehmung des Profilbands angeordnet ist. Dieser radial nach außen ragende Vorsprung kann als zusätzliche Lagesicherung dienen. Der Halt des Dichtelementes innerhalb der Profilschelle wird somit verbessert.

Dabei ist besonders bevorzugt, dass der Vorsprung diametral gegenüber der Haltelasche angeordnet ist. Das Dichtelement wird so an einander gegenüberliegenden Positionen an der Profilschelle gehalten. Es ergibt sich so eine sehr stabile Lagerung, die sowohl im gespannten als auch im ungespannten Zustand der Profilschelle symmetrisch innerhalb des Profilbandes liegt.

Vorzugsweise weist der Vorsprung einen abgewinkelten Endabschnitt auf, der radial außerhalb des Profilbandes liegt. Dieser Endabschnitt kann dabei beispielsweise an der Aussenseite des Profilbandes befestigt sein. Es ist aber auch denkbar, dass er diesen nur zumindest teilweise umgreift und beispielsweise in Form eines Clips eine Befestigung ermöglicht.

In einer bevorzugten Ausgestaltung weist das Profilband zwei Bandhälften auf, die über ein flexibles Brückenelement miteinander verbunden sind, wobei die Ausnehmung durch einen durch das Brückenelement überbrückten Abstand zwischen den beiden Hälften gebildet ist. Das Brückenelement stellt eine zum Aufbiegen der Profilschelle erforderliche Flexibilität dar, sodass die Profilschelle von innen auch auf größere Flansche aufgesetzt werden kann. Indem die durch das Brückenelement überbrückte Ausnehmung für den Vorsprung genutzt wird, sind keine weiteren Ausnehmungen am Profilband erforderlich.

Dabei ist besonders bevorzugt, dass der radiale Vorsprung des Dichtelements insbesondere über den abgewinkelten Endabschnitt mit dem Brückenelement verbunden ist. Dabei kann eine Clipverbindung vorgesehen sein. Alternativ kann der Endabschnitt mit dem Brückenelement verschweißt sein oder eine Prägeverbindung vorgesehen werden.

Zur zusätzlichen Lagesicherung am Flansch des Leitungsendes kann das Dichtelement mindestens eine erste radial nach innen ragende Nase aufweisen. Diese Nase kann dann in lageentsprechende Ausnehmungen am Flansch eingreifen und so die Profilschelle auch in Umfangsrichtung fixieren. Dadurch ist eine einhändige Montage der Profilschelle auf dem Flansch möglich.

Dabei ist besonders bevorzugt, dass das Dichtelement eine zweite radial nach innen ragende Nase aufweist, die in Umfangsrichtung von der ersten radial nach innen ragenden Nase beabstandet ist. Zum einen lassen sich so möglicherweise auftretende Kräfte in Umfangsrichtung besser aufnehmen und eine Lagesicherung verbessern, zum anderen können je nach Positionierung der Nasen eine Orientierung der Schelle bezüglich des Flansches vorgegeben werden.

Dabei ist besonders bevorzugt, dass die erste Nase und die zweite Nase unterschiedliche Abmessungen aufweisen, wobei insbesondere eine Ausdehnung in Umfangsrichtung unterschiedlich ist. Mit einer derartigen Ausgestaltung wird die Position des Dichtelements und der Profilschelle am Flansch genau vorgegeben.

Vorzugsweise weisen die erste Nase und die zweite Nase in Umfangsrichtung einen in etwa gleichen Abstand zur Haltelasche auf. Die Nasen sind dabei insbesondere im Bereich der Spannbacken angeordnet. Somit ergibt sich eine symmetrische Anordnung, wobei jedoch die Abmessungen der Nasen unterschiedlich sein können.

In einer bevorzugten Weiterbildung weist das Dichtelement mindestens einen, insbesondere zwei radial nach innen ragende, elastisch verformbare Finger auf. Mit diesen Fingern kann eine Vorspannung auf die Flansche ausgeübt werden, um einen kraftschlüssigen Halt des Dichtelements am Flansch zu ermöglichen. Dadurch ergibt sich eine einfache Vorpositionierung.

Die eingangs genannte Aufgabe wird durch ein Dichtelement für eine Profilschelle gelöst, wobei das Dichtelement eine sich radial nach außen erstreckende Haltelasche aufweist, die an einem Spannelement festlegbar ist. Über die Haltelasche wird so eine zusätzliche Verbindung zwischen der Profilschelle und dem Dichtelement hergestellt, die auch eine Verdrehung zwischen Dichtelement und Profilschelle verhindert. Dabei kann die Haltelasche insbesondere einstückig mit dem Dichtelement ausgebildet sein.

Die eingangs genannte Aufgabe wird auch durch eine Leitungsverbindungsanordnung mit einem Leitungsende, an dem ein Flansch ausgebildet ist, auf den eine Profilschelle nach einem der Ansprüche 1 bis 11 angeordnet ist, gelöst. Die Profilschelle kann dabei auf dem Leitungsende bzw. dem Flansch vormontiert werden und dort in noch nicht oder kaum gespannten Zustand gehalten werden, bis sie mit einem zweiten Leitungsende verbunden wird.

Dabei ist besonders bevorzugt, dass der Flansch mindestens eine Einformung aufweist, in die die Nase des Dichtelements eingreift. Somit ergibt sich eine formschlüssige Verbindung zwischen dem Dichtelement und dem Flansch, der für eine drehsichere Positionierung der noch nicht gespannten Profilschelle am Leitungsende sorgt. Die Verbindung mit einem zweiten Leitungsende wird somit sehr vereinfacht, wobei die Profilschelle einhändig bedienbar ist.

Die Erfindung wird im Folgenden anhand bevorzugter Ausführungsbeispiele in Verbindung mit den Zeichnungen näher beschrieben. Hierin zeigen:
- Fig. 1: eine Profilschelle mit einem Dichtelement in teilgespanntem Zustand,
- Fig. 2: eine Profilschelle auf einem Flansch in geöffnetem Zustand,
- Fig. 3: eine Draufsicht auf das Dichtelement und
- Fig. 4: eine Seitenansicht des Dichtelements.

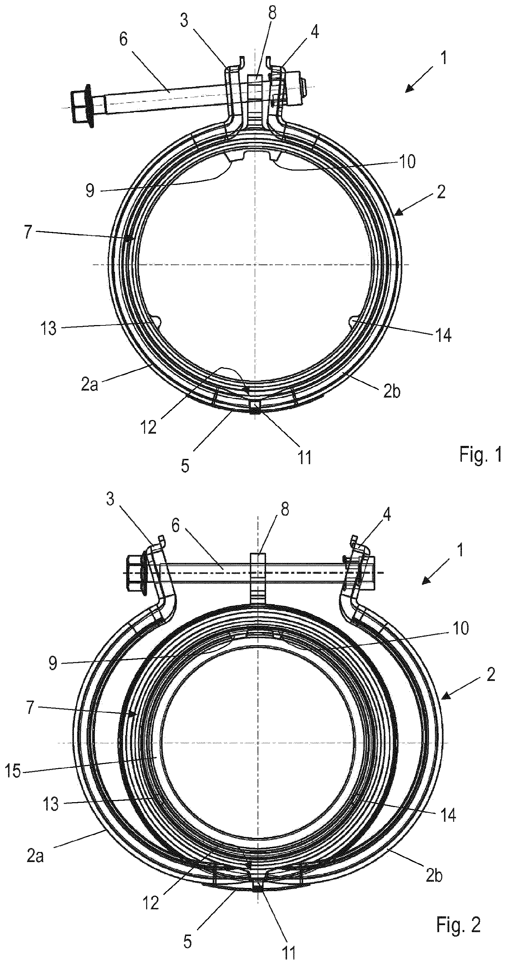

In Figur 1 ist eine Profilschelle 1 dargestellt, die ein Profilband 2 aufweist, das an seinen Enden mit Spannbacken 3, 4 versehen ist. Diese Spannbacken 3, 4 sind durch entsprechendes Umbiegen der Enden des Profilbands 2 hergestellt.

Das Profilband 2 weist zwei Bandhälften 2a, 2b auf, die über ein Brückenelement 5 miteinander verbunden sind. Das Brückenelement 5 ist dabei gegenüber den Spannbacken 3, 4 angeordnet, die über ein Spannelement 6 in Form einer Spannschraube miteinander verbunden sind.

Innerhalb des Profilbands 2 ist ein Dichtelement 7 angeordnet. Das Dichtelement 7 weist eine sich radial nach außen erstreckende Haltelasche 8 auf, die so mit dem Spannelement 6 verbunden ist, dass eine Bewegung des Spannelements 6 in ausreichendem Maße noch möglich ist. So kann das Spannelement 6 gegenüber der Haltelasche 8 verschwenkt werden und eine Rotation des Spannelements 6, die zum Spannen der Profilschelle 1 erforderlich ist, wird durch die Halteschelle 8 nicht behindert.

Das Dichtelement 7 weist ferner eine erste radial nach innen ragende Nase 9 und eine zweite radial nach innen ragende Nase 10 auf, die etwa im Bereich der Spannbacken 3, 4 ausgebildet sind. Die erste Nase 9 und die zweite Nase 10 haben unterschiedliche Abmessungen. So erstreckt sich die zweite Nase 10 in Umfangsrichtung über einen größeren Bereich als die erste Nase 9. Ein Abschnitt der ersten Nase und der zweiten Nase 9, 10 bezogen auf die Haltelasche 8 ist aber im Wesentlichen gleich, sodass sich eine symmetrische Anordnung ergibt.

Das Dichtelement 7 weist ferner einen Vorsprung 11 auf, der diametral gegenüber der Haltelasche 8 angeordnet ist. Der Vorsprung 11 befindet sich dabei im Bereich einer Ausnehmung 12 des Profilbandes . Die Ausnehmung 12 ermöglicht die erforderliche Elastizität des Profilbandes 2, sodass die Profilschelle 1 weit genug aufgebogen werden kann, um auf einen Flansch aufgesetzt werden zu können.

Sowohl die Haltelasche 8 als auch der Vorsprung 11 können dabei einstückig mit dem Dichtelement 7 ausgebildet sein. Beide dienen dazu, das Dichtelement 7 gegenüber dem Profilband 2 bzw. der Profilschelle 1 gegen Verdrehung zu sichern. So wird eine zuverlässige Lagesicherung erhalten.

Zusätzlich weist das Dichtelement 7 zwei nach innen ragende Finger 13, 14 auf, die elastisch verformbar sind und unter Vorspannung an einem Flansch eines Leitungsendes angelegt werden können.

In Figur 2 ist die Profilschelle 1 in geöffnetem Zustand dargestellt, in dem sie auf einen Flansch 15 eines Leitungsendes aufgesetzt wird. Es ist zu erkennen, dass sich das Dichtelement 7 weiterhin symmetrisch innerhalb des Profilbands 2 befindet, wobei es durch den Vorsprung 11 und die Haltelasche 8 sicher gehalten ist. Ein Verdrehen des Dichtelements 7 gegenüber dem Profilband 2 ist somit ausgeschlossen.

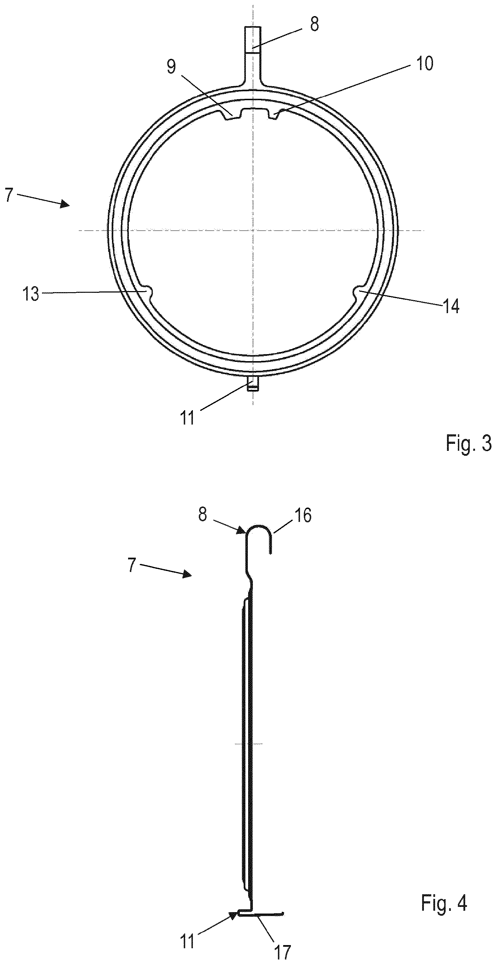

In Figur 3 ist das Dichtelement 7 ohne Profilschelle 1 dargestellt. Gut zu erkennen ist dabei die einstückige Ausgestaltung des Dichtelements 7 mit der Haltelasche 8, den Nasen 9, 10, dem Vorsprung 11 und den Fingern 13, 14.

In der in Figur 4 dargestellten Seitenansicht des Dichtelements 7 ist ein umgebogenes Ende 16 des Vorsprungs 11 zu erkennen. Mit diesem umgebogenen Ende 16 wird das Spannelement 6 umgriffen und so eine formschlüssige Befestigung erreicht, die dem Spannelement 6 ausreichenden Bewegungsspielraum lässt.

Der Vorsprung 11 weist einen abgewinkelten Endabschnitt 17 auf, der in Axialrichtung verläuft. Dieser Endabschnitt 17 wird radial außerhalb des Profilbandes 2 angeordnet und mit einer Außenseite des Profilbands 2 oder dem Brückenelement 5 verbunden. Dabei können verschiedene Verbindungstechniken zum Einsatz kommen, beispielsweise Verschweißen, Verkleben oder Verprägen.

Die erfindungsgemäße Ausgestaltung ermöglicht eine sichere Positionierung des Dichtelements innerhalb der Profilschelle unabhängig vom Öffnungszustand der Profilschelle. Insbesondere beim Vorsehen von zwei Befestigungsbereichen, nämlich der Haltelasche und dem Vorsprung, ergibt sich eine sehr stabile Lagerung. Insbesondere durch die zusätzlichen Nasen kann dabei eine Lagesicherung nicht nur zwischen der Profilschelle und dem Dichtelement erfolgen, sondern auch gegenüber dem Flansch des Leitungsendes. Dies ermöglicht eine einhändige Montage, bei der die Profilschelle nicht extra gesichert werden muss. Auch ergibt sich eine sichere Vorpositionierung der Profilschelle am Flansch eines Leitungsendes, der einen Transport des Leitungsendes zusammen mit der Profilschelle ermöglicht.

Die Erfindung ist nicht auf eines der vorgenannten Ausführungsbeispiele beschränkt, sondern in vielfältiger Weise abwandelbar. So kann insbesondere die Form der Haltelasche und/oder des Vorsprungs von der gezeigten Darstellung abweichen. Auch die Positionierung der Nasen und der Finger kann je nach Anforderungen unterschiedlich ausfallen.

### Bezugszeichenliste

- 1: Profilschelle
- 2: Profilband
- 3: Spannbacke
- 4: Spannbacke
- 5: Brückenelement
- 6: Spannelement
- 7: Dichtelement
- 8: Haltelasche
- 9: erste Nase
- 10: zweite Nase
- 11: Vorsprung
- 12: Ausnehmung
- 13: Finger
- 14: Finger
- 15: Flansch
- 16: Ende
- 17: Abschnitt

## Patentansprüche

1. Profilschelle mit einem Profilband (2) und einem ringförmigen Dichtelement (7), wobei das Profilband (2) an seinen Enden zwei Spannköpfe (3, 4) aufweist, die über ein Spannelement (6) in Form einer Spannschraube miteinander verbunden sind, wobei das Dichtelement (7) eine radial nach außen abstehende Haltelasche (8) aufweist, die am Spannelement (6) gehalten ist, wobei sich die Haltelasche (8) in einen Bereich zwischen den Spannköpfen (3, 4) erstreckt und von außen gut sichtbar ist, wobei die Haltelasche ein umgebogenes Ende (16) aufweist, das das Spannelement (6) zumindest teilweise umgreift.

2. Profilschelle nach Anspruch 1, **dadurch gekennzeichnet, dass** das Dichtelement (7) zumindest einen radial nach außen ragenden Vorsprung (11) aufweist, der im Bereich einer Ausnehmung (12) des Profilbands (2) angeordnet ist.

3. Profilschelle nach Anspruch 2, **dadurch gekennzeichnet, dass** der Vorsprung (11) diametral gegenüber der Haltelasche (8) angeordnet ist.

4. Profilschelle nach einem der Ansprüche 2 oder 3, **dadurch gekennzeichnet, dass** der Vorsprung (11) einen abgewinkelten Endabschnitt (17) aufweist, der radial außerhalb des Profilbandes (2) liegt.

5. Profilschelle nach einem der Ansprüche 2 bis 4, **dadurch gekennzeichnet, dass** das Profilband (2) zwei Bandhälften (2a, 2b) aufweist, die über ein flexibles Brückenelement (5) miteinander verbunden sind, wobei die Ausnehmung (12) durch einen durch das Brückenelement (5) überbrückten Abstand zwischen den Bandhälften (2a, 2b) gebildet ist.

6. Profilschelle nach Anspruch 5, **dadurch gekennzeichnet, dass** der radiale Vorsprung (11) des Dichtelements (7) insbesondere über den abgewinkelten Endabschnitt (17) mit dem Brückenelement (5) verbunden ist.

7. Profilschelle nach einem der vorherigen Ansprüche, **dadurch gekennzeichnet, dass** das Dichtelement (7) mindesten eine erste radial nach innen ragende Nase (9) aufweist.

8. Profilschelle nach Anspruch 7, **dadurch gekennzeichnet, dass** das Dichtelement (7) eine zweite radial nach innen ragende Nase (10) aufweist, die in Umfangsrichtung von der ersten radial nach innen ragenden Nase (9) beabstandet ist.

9. Profilschelle nach Anspruch 8, **dadurch gekennzeichnet, dass** die erste Nase (9) und die zweite Nase (10) unterschiedliche Abmessungen aufweisen, wobei insbesondere eine Ausdehnung in Umfangsrichtung unterschiedlich ist.

10. Profilschelle nach einem der Ansprüche 8 oder 9, **dadurch gekennzeichnet, dass** die erste Nase (9) und die zweite Nase (10) in Umfangsrichtung in gleichem Abstand zur Haltelasche (8) angeordnet sind.

11. Profilschelle nach einem der vorherigen Ansprüche, **dadurch gekennzeichnet, dass** das Dichtelement (7) mindestens einen, insbesondere zwei radial nach innen ragende, elastisch verformbare Finger (13, 14) aufweist.

12. Leitungsverbindungsanordnung mit einem Leitungsende, an dem ein Flansch (15) ausgebildet ist, auf dem eine Profilschelle (1) nach einem der Ansprüche 1 bis 11 angeordnet ist.

13. Leitungsverbindungsanordnung nach Anspruch 12 in Verbindung mit einem der Ansprüche 7 bis 10, **dadurch gekennzeichnet, dass** der Flansch (15) mindestens eine Einformung aufweist, in die die Nase (9, 10) des Dichtelements (7) eingreift.

## Claims

1. A profile clamp comprising a profile strip (2) and a ring-shaped sealing element (7), wherein the profile strip (2) comprises two tensioning heads (3, 4) on its ends, wherein the tensioning heads (3, 4) are connected together by means of a tensioning element (6) being shaped as a tensioning screw, wherein the sealing element (7) comprises a radially outwardly protruding retaining lug (8), which is held on the tensioning element (6), wherein the retaining lug (8) extends in a region between the tensioning heads (3, 4) and is highly visible from the outside, wherein the retaining lug (8) comprises a bent around end (16), which encompasses the tensioning element (6) at least in part.

2. The profile clamp as claimed in claim 1, wherein the sealing element (7) comprises at least one radially outwardly projecting projection (11) which is arranged in the region of a recess (12) of the profile strip (2).

3. The profile clamp as claimed in claim 2, wherein the projection (11) is arranged diametrically opposite the retaining lug (8).

4. The profile clamp as claimed in claim 2 or 3, wherein the projection (11) comprises an angled end portion (17) which lies radially outside the profile strip (2).

5. The profile clamp as claimed in one of claims 2 to 4, wherein the profile strip (2) comprises two strip halves (2a, 2b) which are connected together by means of a flexible bridge element (5), wherein the recess (12) is formed by a spacing between the strip halves (2a, 2b) which is bridged by the bridge element (5).

6. The profile clamp as claimed in claim 5, wherein the radial projection (11) of the sealing element (7) is connected to the bridge element (5) in particular by means of the angled end portion (17).

7. The profile clamp as claimed in one of the preceding claims, wherein the sealing element (7) comprises at least one first radially inwardly projecting tab (9).

8. The profile clamp as claimed in claim 7, wherein the sealing element (7) comprises a second radially inwardly projecting tab (10) which is at a spacing from the first inwardly projecting tab (9) in the circumferential direction.

9. The profile clamp as claimed in claim 8, wherein the first tab (9) and the second tab (10) comprise different dimensions, wherein in particular an extent in the circumferential direction is different.

10. The profile clamp as claimed in claim 8 or 9, wherein the first tab (9) and the second tab (10) are arranged at a same distance from the retaining lug (8) in the circumferential direction.

11. The profile clamp as claimed in one of the preceding claims, wherein the sealing element (7) comprises at least one, particularly two, radially inwardly projecting, elastically deformable finger (13, 14).

12. A conduit connection assembly comprising a conduit end on which is realized a flange (15), on which a profile clamp (1) as claimed in one of claims 1 to 11 is arranged.

13. The conduit connection assembly as claimed in claim 12 in combination with one of claims 7 to 10, wherein the flange (15) comprises at least one depression in which at least one radially inwardly projecting tab (9, 10) of the sealing element (7) engages.

## Revendications

1. Collier de serrage profilé comprenant une bande profilée (2) et un élément d'étanchéité annulaire (7), la bande profilée (2) présentant à ses extrémités deux têtes de serrage (3, 4) qui sont reliées entre elles par un élément de serrage (6) en forme de vis de serrage, l'élément d'étanchéité (7) présentant une languette de support (8) qui fait saillie radialement vers l'extérieur, qui est retenue sur l'élément de serrage (6), la languette de support (8) s'étendant dans une zone située entre les têtes de serrage (3, 4) et étant clairement visible de l'extérieur, la languette de support présentant une extrémité repliée (16) qui entoure au moins partiellement l'élément de serrage (6).

2. Collier de serrage profilé selon la revendication 1, **caractérisé en ce que** l'élément d'étanchéité (7) présente au moins une saillie (11) faisant saillie radialement vers l'extérieur, qui est disposée dans la zone d'un évidement (12) de la bande profilée (2).

3. Collier de serrage profilé selon la revendication 2, **caractérisée en ce que** la saillie (11) est disposée diamétralement à l'opposé de la languette de support (8).

4. Collier de serrage profilé selon l'une des revendications 2 ou 3, **caractérisé en ce que** la saillie (11) présente une partie terminale (17) coudée qui se trouve radialement à l'extérieur de la bande de profil (2).

5. Collier de serrage profilé selon l'une des revendications 2 à 4, **caractérisé en ce que** la bande de profilé (2) présente deux moitiés de bande (2a, 2b) qui sont reliées entre elles par un élément de pontage (5) flexible, l'évidement (12) étant formé par une distance entre les moitiés de bande (2a, 2b) qui est pontée par l'élément de pontage (5).

6. Collier de serrage profilé selon la revendication 5, **caractérisée en ce que** la saillie radiale (11) de l'élément d'étanchéité (7) est reliée à l'élément de pont (5), en particulier par la partie d'extrémité coudée (17).

7. Collier de serrage profilé selon l'une des revendications précédentes, **caractérisée en ce que** l'élément d'étanchéité (7) présente au moins un premier nez (9) faisant saillie radialement vers l'intérieur.

8. Collier de serrage profilé selon la revendication 7, **caractérisé en ce que** l'élément d'étanchéité (7) présente un deuxième nez (10) faisant saillie radialement vers l'intérieur, qui est espacée dans la direction circonférentielle du premier nez (9) faisant saillie radialement vers l'intérieur.

9. Collier de profilé selon la revendication 8, **caractérisé en ce que** le premier nez (9) et le deuxième nez (10) ont des dimensions différentes, en particulier une extension dans la direction circonférentielle étant différente.

10. Collier de profilé selon l'une des revendications 8 ou 9, **caractérisé en ce que** le premier nez (9) et le deuxième nez (10) sont disposées à la même distance de la patte de retenue (8) dans la direction circonférentielle.

11. Collier de serrage profilé selon l'une des revendications précédentes, **caractérisée en ce que** l'élément d'étanchéité (7) présente au moins un, en particulier deux, doigts élastiquement déformables (13, 14) faisant saillie radialement vers l'intérieur.

12. Dispositif de raccordement de ligne comportant une extrémité de ligne sur laquelle est formée une bride (15), sur laquelle est disposé un collier de serrage profilé (1) selon l'une des revendications 1 à 11.

13. Dispositif de raccordement de ligne selon la revendication 12 en liaison avec l'une des revendications 7 à 10, **caractérisé en ce que** la bride (15) présente au moins une entaille dans laquelle s'engage le nez (9, 10) de l'élément d'étanchéité (7).
